**Europäisches Patentamt**

**European Patent Office**

**Office européen des brevets**

(19)

(11) **EP 1 406 215 A1**

(12) # EUROPEAN PATENT APPLICATION

| | |
|---|---|
| (43) Date of publication:<br>**07.04.2004 Bulletin 2004/15** | (51) Int Cl.$^7$: **G06T 15/70** |

(21) Application number: **02447188.0**

(22) Date of filing: **02.10.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI** | (74) Representative:<br>**Brants, Johan Philippe Emile et al<br>De Clercq, Brants & Partners cv<br>Edgard Gevaertdreef 10a<br>9830 Sint-Martens-Latem (BE)** |
| (71) Applicant: **Université Libre de Bruxelles<br>1050 Bruxelles (BE)** | Remarks:<br>Claims 11 to 23 are deemed to be abandoned due<br>to non-payment of the claims fee (Rule 31 (2) EPC). |
| (72) Inventor: **VAN SINT JAN, Serge<br>B-2830 Willebroek (BE)** | |

(54) **Method for the modeling of skeletal kinematics**

(57)     The present invention relates to the field of human kinematics and computer animation. In particular, the present invention relates to a method for the modeling of human skeletal kinematics comprising the steps of obtaining 3D data coordinates of bone segments of said skeleton; obtaining 3D data coordinates of joint motions from said skeleton; and obtaining 3D data coordinates of global motions from a living person, characterized in that, the data obtained on global motion are synchronized with the data obtained on joint motion and whereby said synchronized data is used for the animation of the data obtained on bone segments. The invention also relates to a database containing the mentioned data. Furthermore, the invention contemplates the use of the method according to the invention in medical, bioengineering or ergonomic applications, and in the automotive, movie and robotics industry.

**EP 1 406 215 A1**

**Description**

**FIELD OF THE INVENTION**

The present invention relates to the field of human kinematics and computer animation. In particular, the present invention relates to a method for the modeling of human skeletal kinematics. The invention also contemplates the use of the method according to the invention in medical or ergonomic applications and in the automotive and movie industry.

**BACKGROUND**

Accurate knowledge of human kinematics is of importance in several fields, including medical education, clinical research, biomedical engineering and other industrial areas, sport and entertainment. Kinematics is a study of motion neglecting the forces and torques responsible. The three-dimensional aspects of kinematics are particularly important, but there has been a tendency either to neglect or to simplify them because reliable and accurate data about human kinematics and bone morphology is hardly available.

Human skeleton kinematics simulation is used in realistic human computer animated films, robotics, ergonomics analysis or in industrial design such as cars or airplane cockpit design. Human skeleton modeling includes a wide range of problems to solve such as human skeletal representation and kinematics.

In general, morphological data of human bones are collected from medical imaging, mainly by computerised tomodensitometry (CT-Scan). The latter allows the construction of 3D bone models, representing the human skeleton.

Several techniques can be used to study motion and provide motion data, each of them having its own advantages and disadvantages. For example, electrogoniometry can collect very accurate kinematics data at a joint level both *in vivo* and *in vitro*. However, electrogoniometry is difficult to use to study full-limb motion. Conversely, other systems like motion-capture-devices using stereophotogrammetry (e.g. video cameras) allow to study the relative angular displacement of the joints of a particular limb by tracking skin markers attached to a volunteer or patient during some activities.

Human skeletal kinematics simulation depends on applying kinematics on a model representing a human skeleton. Therefor, the kinematics data need to be registered with the morphological data of the skeleton. Registration refers to the process of combining two or several datasets according to particular methods. In the case of kinematics, a data set from a 3D bone model and motion data are to be combined. Several methods have been described which provide a registration between 3D bone models and motion data.

Some of these methods are registering joint kinematics to 3D bone models. As mentioned above, data on joint motion can be obtained by electrogoniometry or magnetic devices. Cripton et al. (2001; Journal of Biomechanics 34, 1091-1096) describe a method, which registers 3D bone models with joint kinematics collected from magnetic devices. A similar method, registering 3D bone models with joint kinematics collected using electrogoniometry was described by Van Sint Jan et al. (2002; Journal of Biomechanics). However, although these registration methods allow accurate kinematics data collection at the joint level, they do not allow the observation of global motion, i.e. the relative motion of a limb during a particular task, and are not well suited for representing and animating complex motions.

Other registration methods have been described which register global kinematics to 3D bone models. However, these registration methods are generally of a pour quality resulting in unrealistic animations of the bone model.

There remains a need in the art for a method for modeling human skeletal kinematics in a realistic way. Therefore, it is an object of the present invention to provide a method for obtaining a realistic animation model of a human skeleton. The present invention aims to provide an animation developing method, which can generate a realistic three-dimensional modeling picture.

**SUMMARY OF THE INVENTION**

The present invention relates to the method for simulating human skeletal kinematics. It is an object of the present invention to provide a method for modeling human skeletal kinematics, which can represent all the motions of a human body. Therefor, the present invention provides a novel registration method, which enables to combine data of different types of motions, joint as well as global motions, with 3D bone models.

The present invention relates to a method for the modeling of skeletal kinematics comprising the steps of:

a) obtaining 3D data coordinates of bone segments of said skeleton;
b) obtaining 3D data coordinates of joint motions from said skeleton; and
c) obtaining 3D data coordinates of global motions from a living person, whereby the data obtained in step c) are synchronized with the data obtained in step b) and said synchronized data is used for the animation of the data obtained in step a).

The present invention provides a method producing an animation of a human skeleton. The kinematics data obtained in steps b) and c) are used to animate the data on the bone segments of the skeleton obtained in step a). The kinematics data mainly consists of data on joint motion and on global motion. "Joint motion" or "joint kinematics" relates to the motion of a joint, while the "global motion" or "global kinematics" relates to the relative motion of a full limb during a particular motion task.

The 3D data coordinates of bone segments of the skeleton are collected in step a) by using 3D bone models, which can be obtained from any digitization technique, e.g. medical imaging of a cadaver or a patient. The kinematics data are collected from two sources. The data of step b) consist of data on joint motion, which are collected using gait analysis and 3D-electrogoniometry providing accurate measurements of individual joints. The data of step c) consists of global motion data, which are collected using a marker-tracking video system (stereophotogrammetry) from a person performing a particular moving task.

The present invention deals with the registration of movement analysis with skeletal morphological and kinematics data for the construction of realistic animations of human skeleton motions. The method according to the invention relates to the registration between 3D bone models and motion data. According to the invention, the kinematics and the 3D bone model are registered following a novel approach using a combination of joint and segment kinematics. In fact, the invention contemplates an implementation of two registration methods: a first registration method comprising the registration of 3D bone models with joint kinematics and a second registration method comprising the registration of 3D bone models with global kinematics. The present invention thus relates to the implementation of two registration methods for combining 3D kinematics data, obtained from movement analysis with morphological 3D bone models obtained from medical images and other digitization techniques.

The present invention provides a method combining joint and global kinematics data to animate 3D models collected from medical imaging. Such a method results in several innovative features. The method not only allows the combination of different data sources, but also a comparison of results obtained from different protocols, which currently poses an accuracy problem in biomechanics and clinical practice due to a lack in standardisation.

Since the method according to the present invention combines two different registration systems: a first system comprising the registration of bone models with joint kinematics and a second system comprising the registration of bone models with global kinematics, the method combines the advantages of both registration methods. The invention thus enables the modeling human skeletal kinematics in such a way that all the motions of the skeleton, including joint motion as well as global motion of a full limb, can be represented. In addition, since the joint kinematics data obtained in step b) are synchronized with the global motion kinematics data obtained in step c), the method according to the invention enables the observation of accurate joint kinematics integrated within global motion tasks.

Also, the method according to the invention animates the morphological data obtained in step a) with the synchronized joint and motion kinematics data obtained in step b) and c) and enables to provide virtual animations of the human motion kinematics, in particular a virtual animation of the moving skeleton. This animation is a very reliable and realistic one since a combination of the joint and global motion registration methods according to the invention provides realistic simulations of the overall motion of the locomotor apparatus of the skeleton, e.g. a limb, during daily living activities.

Furthermore, the method according to the invention provides multiple resolutions of the animated bone models and enables close zooming for each joint of the skeleton, e.g. limb joint, in order to allow a user to observe physiological joint behavior. As a result, the method according to the invention enables to provide novel knowledge on joint functions.

In addition, different anatomical 3D bone models exist which depend on several parameters such as age, gender, anatomy (height, weight) etc.. The present invention provides a method that can be applied on different types of 3D bone models. The simulation of the skeleton kinematics can be effected for different anatomical 3D bone models.

It is another object of the present invention to provide high quality morphological as well as motion data and animated data on human skeletal kinetics. Therefore, in another embodiment, the present invention relates to a database comprising the data of steps a), b) and c), i.e. 3D morphological data of bone segments of a skeleton; 3D joint motion data from said skeleton; and 3D global motion data of a living person.

The method according to the invention is particularly suitable but not limited to medical or ergonomic applications, for instance for modeling prostheses. The method according to the invention is also applicable in the automotive industry, for instance in car crash testing, or in movie industry.

Other objects and advantages of the present invention will become apparent from the following detailed description taken in conjunction with the accompanying drawings. In the following description the invention has been illustrated with respect to lower limb motions. However, as it will be recognized by the one skilled in the art, the invention is not limited thereto and can be applied on any part of the body.

**DETAILED DESCRIPTION OF THE FIGURES**

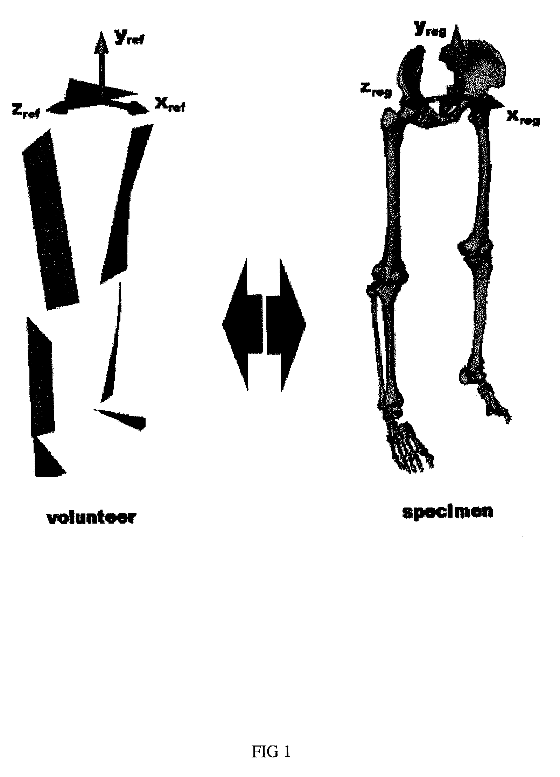

Figure 1 represents the morphological data obtained according to the method of the invention. *In vivo* experiments allowed to obtain a segmental representation (left image) of the lower limb of volunteers using non-invasive manual palpation. Medical imaging combined to efficient segmentation tools allowed to obtain accurate 3D bone models (right image). In this representation both subjects are not similar but have different dimensions and their respective joints show different angle position.

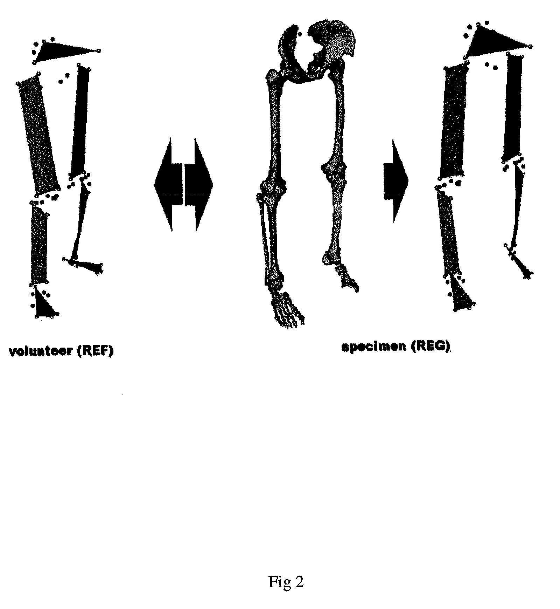

Figure 2 represents the anatomical landmarks of the dataset to be registered. On the left, the manually palpated anatomical landmarks allow a segmental representation of the volunteer's limb segments. In the middle of the figure anatomical landmarks are virtually palpated on the specimen 3D bone model. These landmarks allow a segmental representation (on the right) of the virtual skeleton obtained from medical imaging.

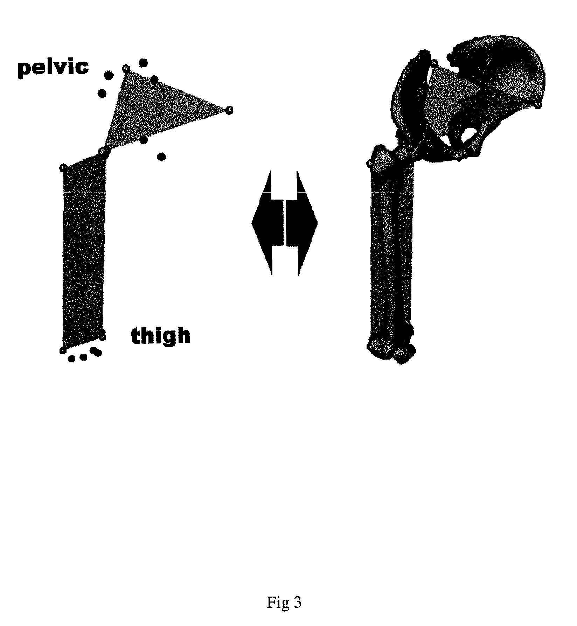

Figure 3 is a detailed view of the pelvis and thigh segment with a dataset obtained by manual palpation (left) and a dataset obtained with virtual palpation (right).

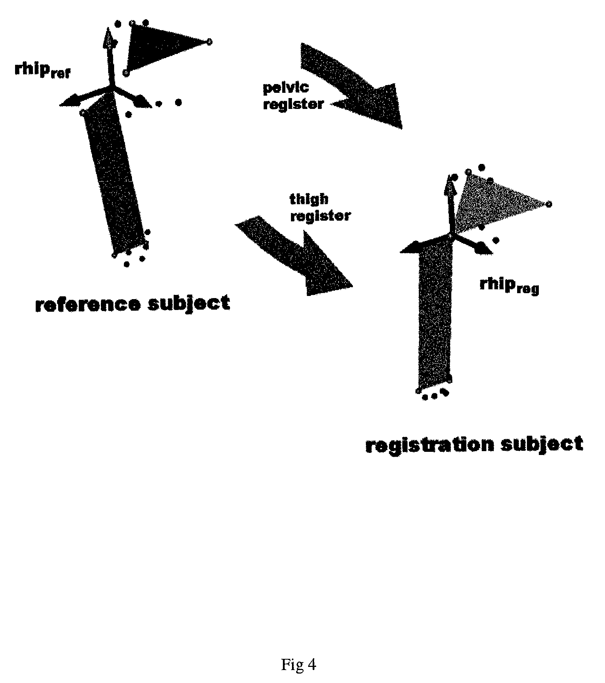

Figure 4 shows the registration procedure for the anatomical segments of the pelvis and thigh.

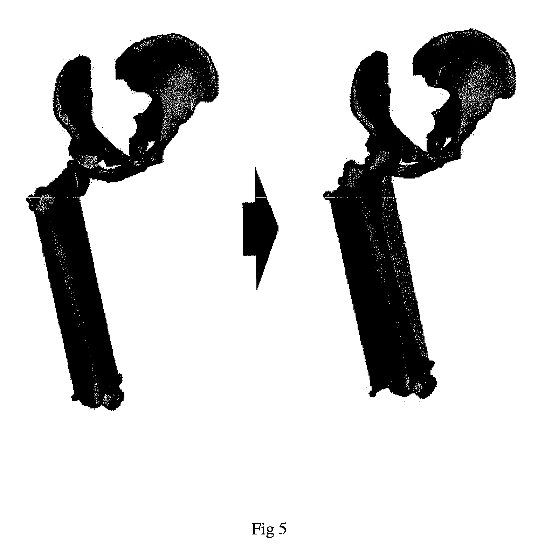

Figure 5 represents on the left, the independent registration of both pelvis bone and femoral bone from the specimen dataset towards the volunteer dataset. As can been seen on the figures both datasets create an important joint dislocation. On the right, the method according to the invention provides a suitable registration of both datasets.

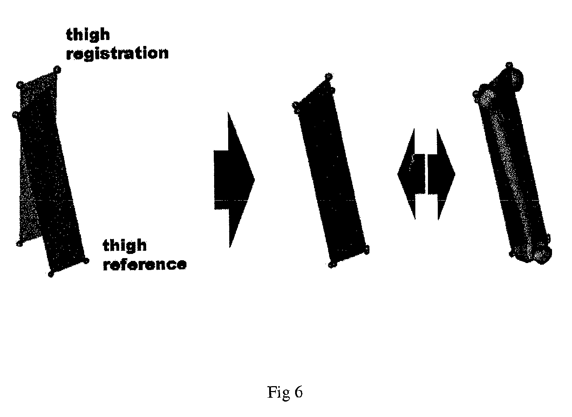

Figure 6 illustrates the segmental registration according to the method of the invention for the femoral bone. The left part shows the volunteer and specimen femoral segments before registration. The center part shows the two same segments after registration. The right part shows a bone segment from the specimen registered to the same anatomical segment from the volunteer.

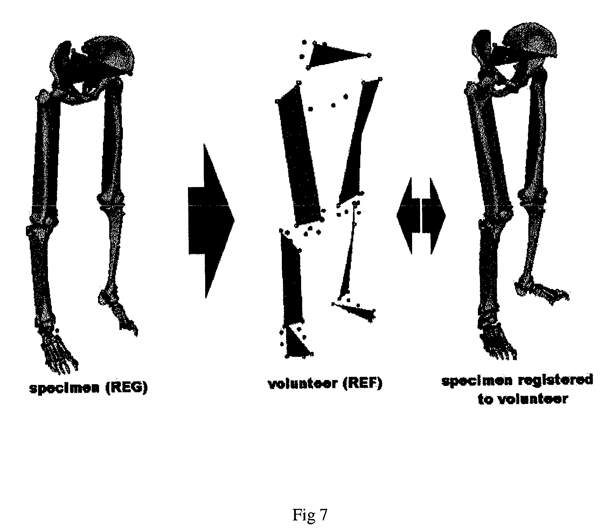

Figure 7 represents the skeleton of the lower limbs. On the left the skeleton is shown prior to registration, with segments oriented according the original medical imaging dataset (REG dataset). In the center the segments of the volunteer (REF dataset) are registered towards the REG dataset. On the right, the REG skeleton is shown registered to the REF position.

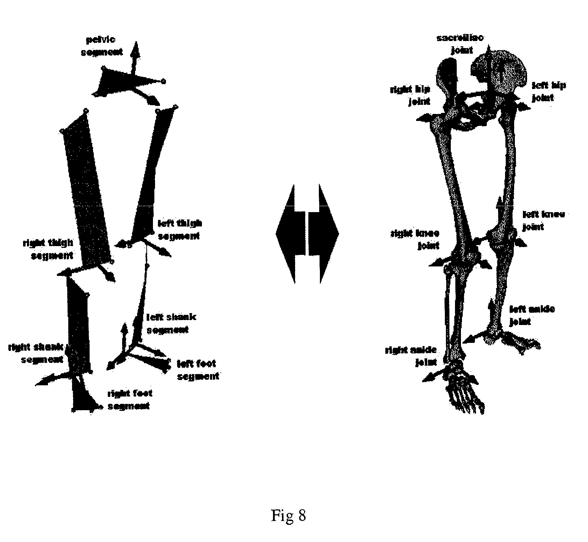

Figure 8 represents the anatomical and joint reference systems from the specimen registered to the volunteer that was build from anatomical landmarks.

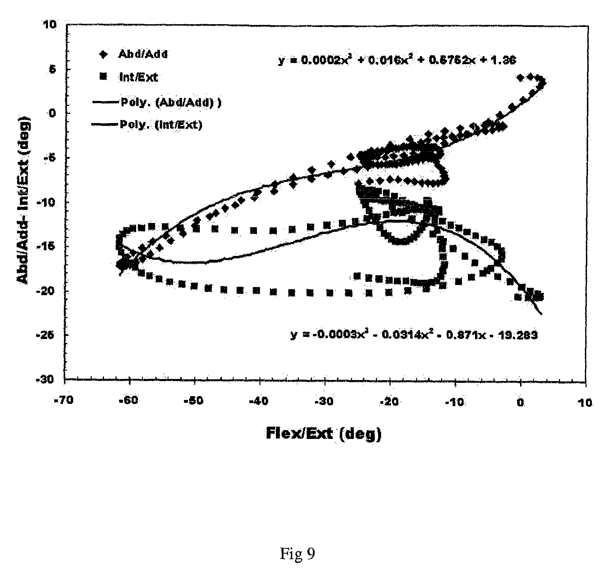

Figure 9 represents the Motion Analysis (MA) data for walking for the knee joint and the relative orientation per flexion/extension. The one DOF mechanism and regression estimation are represented.

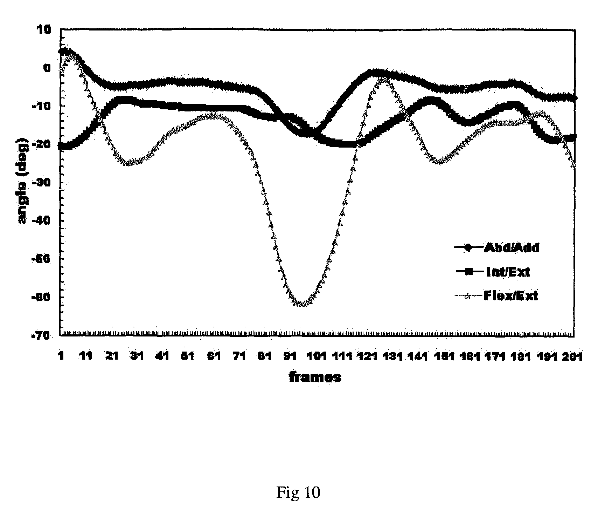

Figure 10 represents the Motion Analysis (MA) data for walking for the knee joint and the relative orientation per frames.

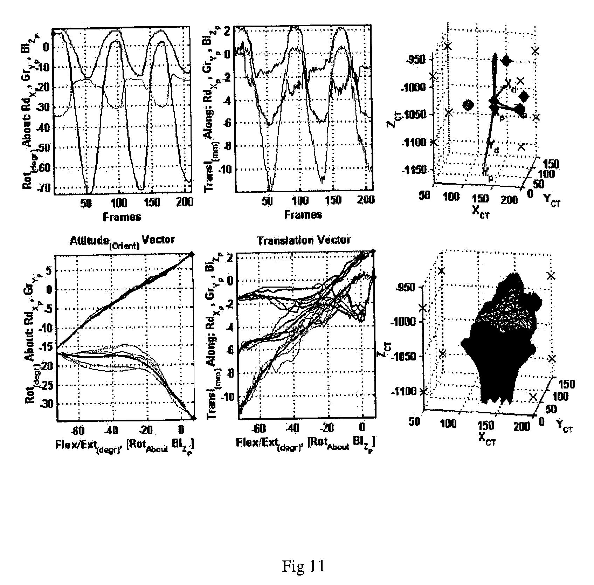

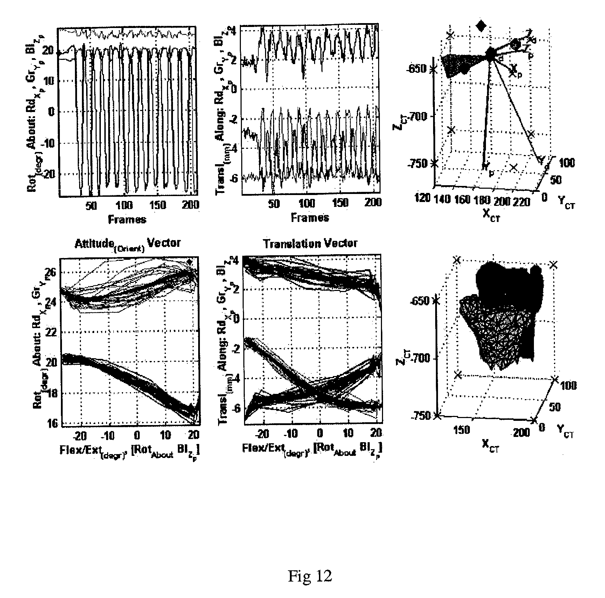

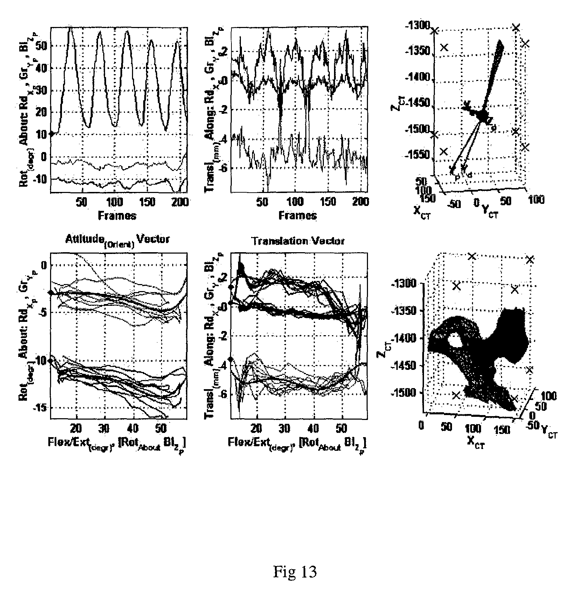

Figure 11 to 13 show the electrogoniometry performed on different joint, including the right knee joint (figure 11), the right ankle joint (figure 12) and the right hip joint (figure 13). The relative orientation and translation per frames and per flexion/extension are shown. The one DOF mechanism and regression estimation are represented. In these figures nonlinear regression 5 order polynomials are depicted by black color.

**DETAILED DESCRIPTION OF THE INVENTION**

The present invention relates to the registration between 3D bone models and motion data. Registration of two or several datasets refers to the combination of these datasets according to particular methods. The method according to the invention provides an implementation of two registration methods: a registration method of bone models with joint kinematics and a registration method of bone models with global kinematics.

In a first embodiment the invention relates to a method for the modeling of skeletal kinematics comprising the steps of:

a) obtaining 3D data coordinates of bone segments of said skeleton;

c) obtaining 3D data coordinates of joint motions from said skeleton; and

c) obtaining 3D data coordinates of global motions from a living person, whereby the data obtained in step c) are synchronized with the data obtained in step b) and said synchronized data is used for the animation of the data obtained in step a).

In particular, in a preferred embodiment, the invention relates to a method whereby said skeleton is essentially a limb and in particular a lower limb comprising a hip, knee and ankle or upper limb comprising a wrist, elbow and shoulder.

As mentioned above, the method provides a combination of two registration methods. The first registration method uses three kinds of data: (1) a large number of anatomical landmarks (AL) located by manual palpation on a volunteer and virtual palpation on a virtual 3D bone model obtained by imaging, (2) movement analysis (MA) data, and (3) 3D bone models obtained from medical imaging. The second registration method is based on the use of four kinds of data: (1) a large number of anatomical landmarks (AL) located by manual palpation and virtual palpation, (2) movement analysis (MA) data, (3) 3D bone models obtained from medical imaging, and (4) joint kinematics data obtained from electrogoniometry. The method according to the invention provides a combination of both registration methods in a single registration method and provides the possibility to observe accurate joint kinematics integrated within global motion movements.

According to the invention, the kinematics data, i.e. the 3D data coordinates of joint motions (step b) and global motions (step c), are obtained by movement-analytical systems. Therefore, in a further embodiment, the invention relates to a method whereby the data of step c) are obtained by stereophotogrammetry or magnetic motion tracking devices and whereby the data of step b) are obtained by 3D electrogoniometry and gait analysis. "Electrogoniometry" (EG) refers to a mechanical system that allows to record very accurate motion data at the joint level, for example the knee, hip or ankle joint. This system does not allow the record of global displacement. "Stereophotogrammetry" is an objective method that allows global motion analysis using video-based system. Using this system, gait analysis data is collected during particular tasks, e.g. walking, stair climbing, chair sitting, jumping, cycling, squatting, etc. performed by volunteers. This system records global displacements of the lower limbs. "Gait analysis" or "motion analysis" refers to the study of motion, generally the global displacement or movement of all segments of a limb, e.g. the displacement of pelvis, thigh, shank and foot during walking.

The method according to the invention comprises the registration of motion data with bone morphology by anatomical landmark matching. "Anatomical landmarks" (Als) are defined as recognition points on the human body delimiting the different bone segments. ALs are located at the surface of the bones and comprise distinctive bone elevations where tendons or ligaments insert, e.g. iliac spines, tibial tuberosity, sustentaculum tali.

In another embodiment, the present invention relates to a method, whereby said registration method using anatomical landmark matching comprises the steps of:

- obtaining anatomical landmarks (ALs) of a segment from manual palpation of a volunteer performing a motion task and from virtual palpation on a 3D bone model obtained from imaging, thereby obtaining a dataset of ALs from manual palpation and a dataset of ALs from virtual palpation;
- clustering said anatomical landmarks for identifying individual segments by associating said ALs into segmental clusters, thereby obtaining a segment from manual palpation and the same segment from virtual palpation;
- determining the relationship between said segment obtained by manual palpation and said segment obtained by virtual palpation;
- registering the segment obtained by virtual palpation with said segment obtained by manual palpation; thereby obtaining a registered virtual segment;
- correcting the position of said registered virtual segment in relation to the position of successive segments.

Techniques using "landmarks" have been previously used to register motion data with bone morphology, but with limited success (Lin et al. 1990; *The Kaohsiung Journal of Medical Sciences,* 6: 6-11; Greenberg et al. 1996; *Gait & Posture*, 4: 167-168). Only a few landmarks are used to perform the registration in the cited techniques. When analyzing the motion simulation results obtained by such methods, it appears that these results are more or less acceptable from a distance, but any close-up made to observe a particular joint closely show unacceptable behavior, such as bone collision, bone dislocation, etc...

The method according to the invention overcomes this drawback and uses a very large number of anatomical landmarks (ALs). Typically about 70 ALs are used for the full lower limb's skeleton according to the method of the invention. In particular, the ALs are obtained from manual palpation on a volunteer performing a motion task and from virtual palpation on a 3D bone specimen of cadavers obtained from medical imaging (see also figure 1, 2 and 3). The same anatomical landmarks are palpated according to different procedures and on different subjects (a volunteer and a specimen). Each AL is labeled. The 3D bone models are obtained from medical imaging, mainly by computerised tomodensitometry (CT-Scan).

*In vivo* experiments allow to obtain a segmental representation (left image in figure 1) of the lower limb of volunteers using non-invasive manual palpation. On the other hand, medical imaging combined to efficient segmentation tools allows to obtain accurate 3D bone models (right image in figure 1). In some case, as presented in figure 1, the volunteer and the 3D bone model have different dimensions, due to the natural human variations, and their respective joints show different positions. The method according to the invention tackles this difference and enables to combine information from both sources, as explained below.

Manual palpation by a well-trained scientist occurs on volunteers undergoing a moving task. The same scientist also performs the virtual palpation on the 3D bone models obtained from medical imaging. Several ALs are identified and each anatomical landmark is labeled. The use of a very large number of anatomical landmarks, typically about 70 for the full lower limbs' skeleton, dramatically improves the registration results for bone objects having a complex shape, such as limbs.

Figure 2 represents the anatomical landmarks of the dataset to be registered. On the left on figure 2, the manually palpated anatomical landmarks allow a segmental representation of the volunteer's limb segments (left part of the figure). On the center, anatomical landmarks are virtually palpated on the specimen 3D bone model. These landmarks allow a segmental representation (right part of the figure) of the virtual skeleton obtained from medical imaging. Thus, the present method applies a morphological registration of the anatomical segments of the volunteers towards the position of the anatomical segments of the specimen, as shown on figure 2.

To perform this morphological registration, rigid body transformations have been adopted despite the variation of shape between individuals, as described below. The methods based on rigid transformations, are based on the consideration that the objects subjected to kinematics or dynamic behave like a rigid body. A "rigid body" can be defined as an object formed by a whole of interdependent particles, which always keep the same distance one to the other, independently of the movements and the states of load existing on the body. The structural changes which can intervene on the objects are not considered, since these changes are not numerically representative nor affecting the results which can be obtained in the studies carried out. Thanks to these considerations the data processing procedures are simplified,

The first stage of the morphological registration is the clustering of the anatomical landmarks. To perform the clustering the label of each AL is analyzed. From this analysis, the ALs are associated into segmental clusters. Consequently each cluster of landmarks is labeled according to the anatomical name of the segment, f.e. pelvis, thigh, shank and foot. The clustering is performed for each segment in the two datasets coming from both manual palpation, performed on the volunteer undergoing the gait analysis experiment, and virtual palpation, performed on the 3D bone model of a cadaver obtained from medical imaging. Figure 3 represents the pelvis and thigh segment from both manual palpation dataset (left) and virtual palpation dataset (right).

Once the segment clustering occurred the relationships of the anatomical segments between both manual palpation (REF) and virtual palpation (REG) is determined using singular value decomposition (SVD) procedures, known in the art (Challis 1995, J. *Biomechanics* 28: 733-737. Therefor a segment position matrix, representing the AL data obtained by manual palpation (*seg_ref*) and by virtual palpation *(seg_reg)* is determined.

$$\overrightarrow{seg}_{ref_n} = \begin{bmatrix} al_{ref_{x1}} & al_{ref_{y_1}} & al_{ref_{z1}} \\ al_{ref_{x2}} & a_{ref_{y_2}} & al_{ref_{z2}} \\ & \cdots & \\ al_{ref_{x_m}} & al_{ref_{y'_m}} & al_{ref_{zm}} \end{bmatrix}$$

equation (1)

$$\overrightarrow{seg}_{reg_n} = \begin{bmatrix} al_{reg_{x1}} & al_{reg_{y_1}} & al_{reg_{z1}} \\ al_{reg_{x2}} & al_{reg_{y_2}} & al_{reg_{z2}} \\ & \cdots & \\ al_{reg_{x_m}} & al_{reg_{y_m}} & al_{reg_{zm}} \end{bmatrix}$$

where:
*n* = 1,2,3,..., segment index (pelvis, right thigh, right shank, right foot,...),
*m* = 1,2,3,..., ALs index, and
*seg* = segment position matrix.

The anatomical segments are linked to each other by joints. The ALs reference matrix is defined using the joint reference system (JRS) positions on the registration subject. The ALs reference matrix is composed of the position vectors common for the successive segments:

$$\vec{al}_{jrs} = \begin{bmatrix} al_{jrs_{x1}} & al_{jrs_{y_1}} & al_{jrs_{z1}} \\ al_{jrs_{x2}} & al_{jrs_{y_2}} & al_{jrs_{z2}} \\ & \cdots & \\ al_{jrs_{xl}} & al_{jrs_{y_l}} & al_{jrs_{zl}} \end{bmatrix} \qquad \text{equation (2)}$$

where $l$ = 1,2,3,..., joint index (sacroiliac, right hip, right knee, right ankle,...).

This ALs matrix consists of a number of co-ordinates, which define the spatial position of the anatomical markers. Each anatomical marker locates an anatomical zone. The determination of the position of this zone is obtained thanks to techniques of palpation. The ALs matrix, can be subdivided in several sub-matrices, which all characterized a specific anatomical sub-area. The anatomical markers, which constitute each ALs submatrix, are used to define the anatomical frames of reference, for each area represented.

Figure 4 represents the registration procedure for the anatomical segments of the pelvis and the thigh.

Once the relationships of a particular segment are found from the SVD procedure, the registration process can take place. Typically the bone morphology obtained by medical imaging is registered to the segment obtained by manual palpation. This registration is performed on each anatomical segment independently and is represented by the following equation:

$$\vec{seg'}_{reg_n} = R_{reg_n}{}^{\mathsf{T}}\vec{seg}_{reg_n} + \vec{d}_{reg_n} \qquad \text{equation (3)}$$

where:

   $seg$ = segment position matrix before registration,
   $seg'$ = segment position matrix after registration,
   $n$ = 1,2,3,..., segment index (pelvis, right thigh, right shank, right foot,...),
   $R$ = rotation component of the registration matrix,
   $d$ = translation component of the registration matrix.

Because the above-described registration is performed on each segment independently, some inaccuracies appear. In general, the independent registration of two segments from the specimen dataset towards the volunteer dataset creates an important and unacceptable joint dislocation. Examples thereof are shown in figures 5, 6 and 7. By the registration procedure according to the method of the invention, this joint inaccuracy is resolved.

The position of the anatomical segment of the registration subject is corrected using the ALs reference matrix. Therefore, a supplementary step has been implemented. This step uses the $\vec{seg}_{ref_n}$ obtained previously on the volunteer dataset in:

$$\vec{seg''}_{reg_n} = \vec{seg'}_{reg_n} + \vec{d'}_{reg_n} \qquad \text{equation (4)}$$

where:

$$\vec{d'}_{reg_n} - \vec{al''}_{jrs_{reg_l}} - \vec{al'}_{jrs_{reg_l}},$$

$$\vec{al''}_{jrs_{reg_l}} = R_{reg_{n-1}}{}^{\mathsf{T}}\vec{al}_{jrs_{reg_l}} + \vec{d}_{reg_{n-1}},$$

$$\vec{al'}_{jrs_{reg_l}} = R_{reg_n}{}^{\mathsf{T}}\vec{al}_{jrs_{ref_l}},$$

$$l = 1 \rightarrow \vec{d'}_{reg_1} = 0 \qquad\qquad \text{equation (5)}$$

$l$ = 1,2,3,..., joint index (sacroiliac, right hip, right knee, right ankle,...)

This second correction leads to an acceptable registration of the skeleton from the specimen dataset (REG) to the frame characterizing the volunteer segment (REF). Examples of a suitable registration of the skeleton according to the method of the invention are given in figures 5, 6 and 7. In figure 5, the independent registration of the pelvis bone and the femoral bone is represented on figure 5. Figure 6 illustrates the segmental registration for the femoral bone. On the left both the volunteer and the specimen femoral segments are shown before registration. In the center, the two same segments are shown after registration. On the right a bone segment from the specimen registered to the same anatomical segment from the volunteer. Figure 7 represents the skeleton of the lower limb ready to be used within motion simulation. On the left the skeleton is shown prior to registration, with segments oriented according the original medical imaging dataset (REG dataset). In the center the segments of volunteer (REF dataset) towards the REG dataset are registered. On the right the REG skeleton is registered to the REF position. It is clear f.e. when comparing the orientation of the foot on the left and the right side of the figure, that the REG dataset is registered to the REF dataset.

The morphology registration and the position corrections are applied to all others anatomical segments, in order to obtain a good virtual representation of the skeleton. At this stage the skeleton is almost ready to be used for the simulation of the motions performed by the volunteer and collected by any data collection system for gait analysis studies. The kinematics functions of the reference subject determined from the gait analysis are applied on the registration subject to visualize the bone segments and to generate the movement simulations. The relationships and hierarchy between each joint and bone segments is defined using the conventional anatomical descriptions as shown on figure 8. Figure 8 represents the anatomical and joint reference systems from the specimen registered to a volunteer, which was established from anatomical landmarks.

In another embodiment, the present invention relates to a method, whereby the data of step b) determine the six DOF (degree of freedom) at the joint level.

In yet another embodiment, the present invention relates to a method, whereby the data of step c) determine a main DOF (degree of freedom).

In a further embodiment, the invention provides for a method whereby the data obtained in step b) are synchronized with the data obtained in step c) and whereby the synchronization includes the registration of the main DOF from step c) with the corresponding DOF of step b) by using regression formulas.

The general idea of the method according to the invention comprises the use of the data obtained by electrogoniometry in step b) and providing the six DOF, in order to create a so-called, one degree-of-freedom (DOF) mechanism. Mathematically speaking, this means that the method enables to express formal relationships between the six DOFs of some joints, for example by using non-linear regression equations with one independent variable.

The specificity of the described method is based on the fact that the original CT morphology of the subject is kept without any elastic-like transformation and used with its own kinematics (EG) data, obtained thanks to electrogoniometry during *in vitro* experiments. EG data is combined with non-linear regression analysis application to perform registration and integrated within complex motion tasks (e.g. walking, running, etc) (data obtained in step c).

The final simulation shows the *in vitro* kinematics of a skeleton obtained from a cadaver (EG data) and tuned to animate the above data using particular motion analysis data (MA) obtained from a volunteer performing *in vivo* tasks. This approach can also be used to better visualize the relationships of the lower limb segments during *in vivo* task performed by a volunteer or a patient. Of course, the animated skeleton is not the skeleton of the volunteer/patient, but the results are clearly superior to the classical "stick" figures. The tuning mechanism is explained in more detail below.

Motion analysis (MA) data or gait analysis data is usually available in some global or local technical coordinate system. This data has to be corrected to the Reference coordinate System (JRS). From these data, together with additional description in the configuration file, i.e. joints tree structure and Joints Reference System (JRS) convention, it is possible to calculate volunteer motion in relative (JRS) coordinate system. It is important to underline that for the JRS calculation Anatomical Landmarks (ALs) distribution and Anatomical Frames (AF) definitions must be adopted.

As a result of this data reshaping, in the output file containing the motion data both position and orientation of the Global Reference System (GRS) are set at the first frame of the Pelvis AF instead of the conventional Laboratory GRS usually adopted in gait analysis. For each internal joint this procedure is repeated.

When all MA data are available in JRS, an Orientation Vector $\vec{\theta}$ and a Translation Vector $\vec{d}$ projected on the Proximal AF (OVP convention) are used for further data analysis. In the supposition that:

$$\vec{\theta}=\begin{bmatrix}\theta_x\\\theta_y\\\theta_z\end{bmatrix}, \quad \theta=\sqrt{\vec{\theta}^T\vec{\theta}}, \quad A(\theta)=\begin{bmatrix}0 & -\theta_z & \theta_y\\\theta_z & 0 & -\theta_x\\-\theta_y & \theta_x & 0\end{bmatrix} \qquad \text{equation (6)}$$

then the orientation vector, $\vec{\theta}$ and its rotation matrix R($\theta$) can be uniquely defined by:

$$R(\theta) = \cos\theta\ I + \frac{\sin\theta}{\theta}A(\theta) + \frac{1-\cos\theta}{\theta^2}\vec{\theta}\vec{\theta}^T \qquad \text{equation (7)}$$

where I is the identity matrix.

The equation 7 together with equations 3 and 4, are the basis for solving the direct kinematics problem, which appears each time relationships among two or more reference systems are processed.

Usually, the EG data processing follows the same procedure. The only difference is due to different data collection protocols between both EG and MA data. On the other hand, these differences disappear if the ALs and the bones vertexes are expressed in the segment's AFs. So, if both kinds of data sets are represented in similar way, then it is possible to compare them and even to combine them together.

For example, the pelvis motion is animated using all DOFs from MA data. Motion for both hips is animated using only corresponding rotations from the MA data. It is assumed that no translation exist in this joint. Data for both knee and ankle kinematics, comes from MA for the DOF corresponding to the flexion/extension motion and from EG for the remaining DOFs. Indeed, it is widely acknowledged that the only valid DOF for both knee and ankle using MA techniques is flexion/extension. In order to obtain physiologically realistic motions, the current method used the flexion/extension DOF from MA to estimate and synchronize the other DOFs using regression formulas. The main reason to eliminate 5DOF from MA, except the flexion/extension DOF, is their unstable behavior mainly due to measurement errors. Figure 9 and 10 show an example for the knee kinematics. MA noise and inaccuracies are well visible in figure 9. It is obvious that it is difficult to estimate any relationships between flexion/extension, internal/external rotation and abduction/adduction.

As mentioned previously, the other DOFs are obtained from EG data (figure 11 for the knee joint, figure 12 for the ankle joint and figure 13 for the hip joint). Assuming that both knee and ankle joint show a behavior where all DOFs are closely linked, these kinds of graphs can be used to extract one particular DOF from the others five DOFs present in the joint. This has been performed using non-linear regression analysis to extract one particular DOF mechanism for our application. It is important that the relationships between all DOFs are statistically reliable and show the same kind of behavior for different subjects. In these figures nonlinear regression 5 order polynomials are depicted by black color.

After determining the relationships between the unique MA DOFs and the remaining five DOFs from EG, output files are created following the conventions from the PGD format. In the registered output files all six DOFs motions are defined in segmental AFs. The temporary GRS is located at the pelvis AF during the first motion frame. It shall be understood that old coordinates of the ALs have to be "relocated" in to the segmental AF as well.

The above-described approach gives the opportunity to create several kinds of registered motions by modifying the method's parameters.

Basically, the procedure of EG data collection of a particular subject allows independent measurements for all joints of both lower limbs, i.e. six joints (2 hip joints, 2 knee joints, 2 ankle joints). For each joint several iterations of particular passive motion are available. For the knee and the ankle joints, the method according to the invention uses EG data. Figures 12 and 11, for instance illustrate 3D electrogoniometry of the right ankle joint and the right knee joint, respectively. The figures represent the relative orientation and translation of the frames and flexion/extension. The one DOF mechanism and the regression estimation are represented. During data processing graph analysis shows the variations of the curves even during several cycle of the same joint motion, especially for the flexion extension DOF, for example a hysteresis effect is present. It means that for particular external constraints specific regression equations need to be applied.

For the registration with MA data it may be interesting to combine the regression equations, obtained from different subjects, as well as to apply mirror's regression equations, taking in to account nearly mirror symmetry of the human extremities joints motion. This can be applied in order to create some average values for particular DOFs. It shall be understood that for specific analysis of a given subject, only the very specific values for this subject need to be used.

In another embodiment, the invention relates to a method whereby the synchronized data of steps b) and c) are registered with the data obtained in step a) by the least square procedure. The tuning approach described above has one evident and expected problem. The volunteer, i.e. performing the *in vivo* MA tasks, and specimens, i.e. used for *in vitro* EG measurements, may show rather different sizes of segments. Therefore, to improve the final result the following optimization approach has been implemented. This improved method is based on the comparison of the pelvis motion and both feet relative motion in original MA data and in the MA data obtained after applying the data reshaping protocol described above. This improvement adjusts the relative positions frame by frame by varying some sensitive parameters and is referred to as the Inverse Kinematics (IK) approach.

A set of design parameters is determined. Optimization techniques from Gill et al. (1981; *Academic Press, London*) and Coleman & Li (1994, *Mathematical Programming*, 67:189-224; 1996, *SIAM Journal on Optimization*, 6: 418-445) are used to find a set of design parameters,

$$x = \left[x_1, ..., x_n\right]^T .$$

In a simple case the optimisation includes the minimization or maximization of some system parameters that are dependent on x. In a more advanced formulation the objective function, f(x), to be minimized or maximized, is subject to constraints in the form of $m_l$ equality constraints, $G_i(x) = 0$, $i = 1,...,m_l$, and inequality constraints $G_i(x) \leq 0$, $i = 1+m_l,...,$ $m$ , and/or parameter bounds

$$\left[X_L, X_R\right].$$

A general problem description is to find the min $f(x)$, $x \in R^n$ of an objective (cost) function, using some of the entire set of the above-mentioned constraints. An efficient and accurate solution to this problem is not only dependent on the size of the problem in terms of the number of constraints and design variables, but also on the characteristics of the objective function and constraints. When both objective function and constraints are linear functions, the problem is known as a linear programming problem. Quadratic programming deals with the minimization or maximization of a quadratic objective function that is linearly constrained. For both problems, reliable solution procedures are readily available.

More difficult to solve is the nonlinear programming problem in which the objective function and constraints are nonlinear. A solution of the nonlinear problem generally requires an iterative procedure to establish a direction of search at each major iteration. Numerical implementation of the different optimization methods usually only requests coding of the cost function uniquely given by

$$x = \left[x_1, ..., x_n\right]^T .$$

Both volunteer and specimen used for registration have different sizes. This size can be approximately estimated as the average, between both legs, of the distance between hip and calcaneus.

For the considered problem of advanced registration the cost function is determined as the positive difference between two couples (calculated from MA and EG plus regression) of orientation (equation 7) and translation vectors. The first one is the relative motion between both hip and ankle joints obtained from MA kinematics after a scaling was performed. The second one calculates the same relative motion but using regression and direct kinematics solution with the formulas mentioned above.

Solving the minimization problem (or inverse kinematics) for each frame of motion and independently for each leg gives a set of three rotations for hip and the flexion/extension DOF angles for both knee and ankle joints. This allows keeping the relative pelvis and foot motions according to the MA estimation. Usually this pelvis-to-foot relationships is estimated by MA with a reliable precision, because the motion of the fixed limb is minimal and the pelvis shows low acceleration during the analyzed *in vivo* tasks.

Standard numerical optimization methods usually give a local minimum estimation. In order to get a global minimum a double step-optimization approach was used in the present invention. During the first step a random generator associated to a Monte-Carlo-liked algorithm was used to get the initial value for the second step, being the regular method.

Another aspect is the independent, frame-by-frame minimization. There is no doubt that this way is much more economic than the total minimization per time interval of interest.

In a further embodiment, the invention contemplates a method whereby further processing is performed on the final registered data through a rendering program to produce a final animation of the moving skeleton. All data are processed using the methods described herein using custom programs and Matlab procedures. The final output, i.e. the real time simulation, is written in standard format (i.e. VRML format). This format is importable by most visualization software.

The invention also relates to the images obtained by the method according to the invention. A sequence of these images represents a realistic virtual animation of a moving human skeleton. An important aspect of the invention is the possibility to closely zoom in for each joint of the skeleton, e.g. limb joint, in order to allow a user to observe physiological joint behavior.

In a further embodiment, the present invention also relates to the database comprising the 3D data of bone segments, 3D data coordinates of joint motions of a skeleton and 3D coordinates of global motions from a living person.

The database according to the invention provides many different anatomical models, data sources, data format, and data validation of high quality.

The database according to the invention shows 3D data of bone segments and bone models available in several resolutions. The database is offering three degrees of resolution for bone models, including full, medium, small resolution. Different resolutions are of interest for different applications, as explained below. Full resolution shows the models obtained from segmentation with no decimation. Decimation is the process that allows a systemic reduction in the number of facets in the model mesh. Because no facet reduction was applied, these models require large amounts of storage, i.e. some models have several hundred thousand facets. This resolution is particularly suitable for use as input in data processing algorithms (e.g. decimation). Small resolution shows the models obtained after segmentation and extensive decimation. The maximum number of facets in these models is a few thousand. This resolution is particularly suitable for use for simulation purposes (e.g. real time simulation of complex human motion). Medium resolution shows the models obtained after a medium decimation has been applied. It is a good compromise between the full and small resolutions, and aims to provide models that combine accurate 3D anatomical data with a mesh sufficiently decimated to allow comfortable 3D object manipulation on an everyday computer.

It is a well-accepted fact that the human species shows many anatomical variations and that one generic model is not representative. The present invention provides for a database wherein multiple anatomical models are available, depending for instance on age, gender, height and weight of a volunteer. Also global motion data is provided in the database according to the invention, including data on global movements such as up-right posture, walking, stairs ascending or descending, chair raising or sitting, step up and down, step up, walk-stop-walk, walk-step-walk, cycling, squatting, jumping, etc.

In addition, the database may also provide datasets of registered data obtained according to the method according to the invention.

In yet another embodiment, the method according to the invention is particularly suitable to medical, bioengineering or ergonomic applications. For instance, in a particular embodiment, the method according to the invention is used for modeling prostheses or in ergonomic studies.

Another application possibility of the method according to the invention comprises the field of automotive industry. A typical example of exploitation of the method according to the invention and the data obtained by the method according to the invention includes car crash testing within a virtual environment including anatomical human models. Realistic virtual human bodies are integrated into virtual cars and constraints on the bodies will be then analysed to help to improve car safety.

In another embodiment the present invention also relates to the use of the method according to the invention in the movie industry. For instance the method according ot he invention can be used in the virtual world, e.g. for populating virtual worlds with accurate humans for video games or computer animated movies.

In another embodiement the present invention also relates to the use of the method according to the invention in the robotics industry.

The method according to the invention may be further used in fields of fundamental research, e.g. better understanding of the human kinematics and in biomechanics.

**Claims**

1. Method for the modeling of skeletal kinematics comprising the steps of:

   a) obtaining 3D data coordinates of bone segments of said skeleton;
   b) obtaining 3D data coordinates of joint motions from said skeleton; and
   c) obtaining 3D data coordinates of global motions from a living person, whereby the data obtained in step c) are synchronized with the data obtained in step b) and said synchronized data is used for the animation of the data obtained in step a).

**2.** Method according to claim 1, whereby said method comprises the representation of a skeleton in step a) and the application of the kinematics data obtained in step b) and c) thereon.

**3.** Method according to claim 1 or 2, whereby said skeleton representation is obtained by registration of data coordinates obtained by movement analysis with a 3D bone model obtained by imaging.

**4.** Method according to claim 3, whereby said registration is performed using anatomical landmark matching.

**5.** Method according to claims 3 or 4, whereby said registration method using anatomical landmark matching comprises the steps of:

- obtaining anatomical landmarks (ALs) of a segment from manual palpation of a volunteer performing a motion task and from virtual palpation on a 3D bone model obtained from imaging, thereby obtaining a dataset of ALs from manual palpation and a dataset of ALs from virtual palpation;
- clustering said anatomical landmarks for identifying individual segments by associating said ALs into segmental clusters, thereby obtaining a segment from manual palpation and the same segment from virtual palpation;
- determining the relationship between said segment obtained by manual palpation and said segment obtained by virtual palpation;
- registering the segment obtained by virtual palpation with said segment obtained by manual palpation; thereby obtaining a registered virtual segment;
- correcting the position of said registered virtual segment in relation to the position of successive segments.

**6.** Method according to any of claims 3 to 5 whereby the relationship between said segment obtained by manual palpation and said segment obtained by virtual palpation is determined by SVD procedure, thereby obtaining a segment position matrix for manual palpation ($seg_{ref}$) and a segment position matrix for virtual palpation ($seg_{reg}$).

**7.** Method according to any of claims 3 to 6, whereby the registration of the segment obtained by virtual palpation with said segment obtained by manual palpation is represented by:

$$\overrightarrow{seg'}_{reg_n} = R_{reg_n}{}^{T}\overrightarrow{seg}_{reg_n} + \vec{d}_{reg_n} \qquad \text{equation (3)}$$

where:

$seg$ = segment position matrix before registration,
$seg'$ = segment position matrix after registration,
$n$ = 1,2,3,..., is the segment index
$R$ = rotation component of the registration matrix,
$d$ = translation component of the registration matrix.

**8.** Method according to any of claims 3 to 7, whereby the position of said registered virtual segment is corrected using an ALs reference matrix ($al_{jrs}$):

$$\overrightarrow{seg''}_{reg_n} = \overrightarrow{seg'}_{reg_n} + \vec{d'}_{reg_n} \qquad \text{equation (4)}$$

where:

$$\vec{d'}_{reg_n} - \vec{al''}_{jrs_{reg_l}} - \vec{al'}_{jrs_{reg_l}},$$

$$\vec{al''}_{jrs_{reg_l}} = R_{reg_{n-1}}{}^{T}\vec{al}_{jrs_{reg_l}} + \vec{d}_{reg_{n-1}},$$

$$\vec{al'}_{jrs_{reg_l}} = R_{reg_n}{}^{T}\vec{al}_{jrs_{ref_l}},$$

$$l = 1 \rightarrow \vec{d'}_{reg_1} = 0$$

l = 1,2,3,..., joint index

**9.** Method according to any of claims 3 to 8 whereby said registration procedure is repeated for each segment thereby obtaining a virtual skeleton representation.

**10.** Method according to any of claims 1 to 9, whereby the data of step b) determine the 6 DOF (degree of freedom) at the joint level.

**11.** Method according to claim 1 or 10, whereby the data of step c) determine a main DOF.

**12.** Method according to any of the previous claims 1 to 11, whereby the synchronization includes the registration of the main DOF from step c) with the corresponding DOF of step b) by using regression formulas.

**13.** Method according to any of claims 1 to 12, whereby the data of step c) are obtained by stereophotogrammetry or magnetic motion tracking devices and whereby the data of step b) are obtained by 3D electrogoniometry and gait analysis.

**14.** Method according to any of claims 1 to 13, whereby the motion data of step b) and c) is reshaped to the joint reference coordinate system following the formula:

$$R(\theta) = \cos \theta \, I + \frac{\sin \theta}{\theta} A(\theta) + \frac{1 - \cos \theta}{\theta^2} \vec{\theta}\vec{\theta}^T \qquad \text{equation (7)}$$

where I is the identity matrix, $R(\theta)$ is the rotation matrix, $\vec{\theta}$ is the orientation vector,

$$\vec{\theta} = \begin{bmatrix} \theta_x \\ \theta_y \\ \theta_z \end{bmatrix}, \quad \theta = \sqrt{\vec{\theta}^T \vec{\theta}}, \quad A(\theta) = \begin{bmatrix} 0 & -\theta_z & \theta_y \\ \theta_z & 0 & -\theta_x \\ -\theta_y & \theta_x & 0 \end{bmatrix}$$

**15.** Method according to any of the previous claims 1 to 14, whereby the synchronized data of steps b) and c) are registered with the data obtained in step a) by the least square procedure.

**16.** Method according to any of the previous claims 1 to 15, whereby further a processing is performed on the final registered data through a rendering program to produce a final animation of the moving skeleton.

**17.** Method according to any of the previous claims 1 to 16, whereby said skeleton is essentially a lower limb comprising a hip, knee and ankle or an upper limb comprising a wrist, elbow and shoulder.

**18.** Images obtained by the method according to any of the previous claims 1 to 17.

**19.** Database comprising the data of steps a), b) and c) obtained according to the method of any of claims 1 to 17.

**20.** Use of the method according to any of the previous claims 1 to 17 for ergonomic applications, in particular for modeling prostheses.

**21.** Use of the method according to any of claims 1 to 17 for applications in the automotive industry, in particular for car crash testing.

**22.** Use of a method according to any of claim 1 to 17 for application in the movie industry, in particular for simulating skeletal kinematics in video games or computer animated movies.

**23.** Use of a method according to any of claim 1 to 17 for application in the robotics industry.

FIG 1

voluntoor (REF)    specimen (REG)

Fig 2

Fig 3

rhip$_{ref}$

pelvic
register

thigh
register

rhip$_{reg}$

**reference subject**

**registration subject**

Fig 4

Fig 5

thigh
registration

thigh
reference

Fig 6

specimen (REG)        volunteer (REF)        specimen registered
                                                to volunteer

Fig 7

Fig 8

Fig 9

Fig 10

Fig 11

Fig 12

Fig 13

**European Patent Office**

**EUROPEAN SEARCH REPORT**

Application Number

EP 02 44 7188

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 625 577 A (KUNII TOSIYASU ET AL) 29 April 1997 (1997-04-29) * abstract; figures 1,2,4 * * column 3, line 10 - line 20 * * column 4, line 38 - line 39 * | 1,2,10 | G06T15/70 |
| Y | | 3-9 | |
| Y | BERNARD,R.; PERNUS,F.: "Statistical approach to anatomical landmark extraction in radiographs" MEDICAL IMAGING 2001 : IMAGE PROCESSING; PROC. SPIE, 19 - 22 February 2001, pages 537-544, XP008014233 San Diego,CA,USA * page 541, paragraph 2.3; figures 1,4,5 * | 3-9 | |
| X | US 6 307 563 B2 (KIMURA SHIGEKI) 23 October 2001 (2001-10-23) * column 7, line 60 - column 8, line 24 * * claims 1,10,17 * | 1,2,10 | |
| X | WO 01 64106 A (SANDOW MICHAEL JOHN ;PAPPAS SAM (AU); MACROPACE PRODUCTS PTY LTD ()) 7 September 2001 (2001-09-07) * abstract; claims 1,3-6 * | 1 | TECHNICAL FIELDS SEARCHED (Int.Cl.7) G06T |
| A | FR 2 666 716 A (POLY ANDRE ;SILVA NIMAL DE (FR)) 13 March 1992 (1992-03-13) * abstract; claims 4,5 * * page 3, line 16 - line 28 * * page 4, line 16 - line 24 * | 3-9 | |
| A | WO 89 09458 A (STRANDBERG OERJAN) 5 October 1989 (1989-10-05) * abstract; figure 7 * | 1-10 | |

-/--

The present search report has been drawn up for all claims

| Place of search | Date of completion of the search | Examiner |
|---|---|---|
| THE HAGUE | 24 February 2003 | Diallo, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## EUROPEAN SEARCH REPORT

European Patent Office

Application Number

EP 02 44 7188

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MA,B. ET AL: "Spotlights: a robust method for surface-based registration in orthopedic surgery" MICCAI' 99, 19 - 22 September 1999, pages 936-944, XP008014234 Cambridge, UK * page 937, paragraph 2 * | 3 | |
| A | DE 101 37 655 A (SIEMENS CORP RES INC) 13 June 2002 (2002-06-13) * paragraph [0036] - paragraph [0040]; figures 2,3 * | | |

TECHNICAL FIELDS SEARCHED (Int.Cl.7)

The present search report has been drawn up for all claims

| Place of search | Date of completion of the search | Examiner |
|---|---|---|
| THE HAGUE | 24 February 2003 | Diallo, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 44 7188

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2003

| Patent document cited in search report | | Publication date | Patent family member(s) | | Publication date |
|---|---|---|---|---|---|
| US 5625577 | A | 29-04-1997 | JP | 4270372 A | 25-09-1992 |
| | | | JP | 7313648 A | 05-12-1995 |
| | | | JP | 4279979 A | 06-10-1992 |
| | | | JP | 4271734 A | 28-09-1992 |
| | | | CA | 2043885 A1 | 26-06-1992 |
| | | | EP | 0520099 A1 | 30-12-1992 |
| | | | CA | 2043884 A1 | 26-06-1992 |
| | | | CA | 2043883 A1 | 26-06-1992 |
| | | | EP | 0520098 A1 | 30-12-1992 |
| | | | CA | 2043886 A1 | 26-06-1992 |
| US 6307563 | B2 | 14-06-2001 | JP | 10302083 A | 13-11-1998 |
| | | | JP | 10302085 A | 13-11-1998 |
| | | | JP | 10302084 A | 13-11-1998 |
| | | | US | 2001003449 A1 | 14-06-2001 |
| WO 0164106 | A | 07-09-2001 | WO | 0164106 A1 | 07-09-2001 |
| | | | AU | 3713801 A | 12-09-2001 |
| | | | EP | 1261281 A1 | 04-12-2002 |
| | | | US | 2003023156 A1 | 30-01-2003 |
| FR 2666716 | A | 13-03-1992 | FR | 2666716 A1 | 13-03-1992 |
| WO 8909458 | A | 05-10-1989 | AT | 116752 T | 15-01-1995 |
| | | | DE | 68920436 D1 | 16-02-1995 |
| | | | DE | 68920436 T2 | 24-08-1995 |
| | | | EP | 0427723 A1 | 22-05-1991 |
| | | | JP | 3004666 B2 | 31-01-2000 |
| | | | JP | 5503379 T | 03-06-1993 |
| | | | WO | 8909458 A1 | 05-10-1989 |
| | | | US | 6054999 A | 25-04-2000 |
| DE 10137655 | A | 13-06-2002 | DE | 10137655 A1 | 13-06-2002 |
| | | | JP | 2002159478 A | 04-06-2002 |

EPO FORM P0459

For more details about this annex : see Official Journal of the European Patent Office, No. 12/82